# EUROPÄISCHE PATENTSCHRIFT

(11) **EP 1 646 848 B1**
(45) Veröffentlichungstag und Bekanntmachung des Hinweises auf die Patenterteilung: **07.09.2016**
(21) Anmeldenummer: 04762347.5
(22) Anmeldetag: 06.07.2004
(51) Int. Cl.: G01F 1/684, G01F 5/00, G01F 15/12

(54) **VORRICHTUNG ZUR BESTIMMUNG WENIGSTENS EINES PARAMETERS EINES IN EINER LEITUNG STRÖMENDEN MEDIUMS**
DEVICE FOR DETERMINING AT LEAST ONE PARAMETER OF A MEDIUM FLOWING IN A CONDUIT
DISPOSITIF POUR DETERMINER AU MOINS UN PARAMETRE D'UNE SUBSTANCE EN ECOULEMENT DANS UN CONDUIT

(30) Priorität: 14.07.2003 DE 10331751; 17.10.2003 DE 10348400
(43) Veröffentlichungstag der Anmeldung: 19.04.2006
(73) Patentinhaber: ROBERT BOSCH GMBH, 70442 Stuttgart (DE)
(72) Erfinder: BEYRICH, Hans, 71691 Freiberg (DE); KONZELMANN, Uwe, 71679 Asperg (DE); GMELIN, Christoph, 70597 Stuttgart (DE); HENNIG, Oliver, 74232 Abstatt (DE)
(86) Internationale Anmeldenummer: PCT/DE2004/001443
(87) Internationale Veröffentlichungsnummer: WO 2005/008186

(56) Entgegenhaltungen:
- WO-A-01/18498
- WO-A-01/18499
- WO-A-92/21940
- US-A- 4 457 169
- US-A- 5 485 746
- US-A- 5 866 824

## Beschreibung

### Stand der Technik

Die Erfindung betrifft eine Vorrichtung zur Bestimmung wenigstens eines Parameters eines in einer Leitung strömenden Mediums mit den Merkmalen des Oberbegriffs des unabhängigen Anspruchs 1.

Eine derartige Vorrichtung ist beispielsweise aus der DE 101 35 142 A1 bekannt und wird beispielsweise im Ansaugtrakt einer Brennkraftmaschine eingesetzt, um den der Brennkraftmaschine durch eine Leitung zugeführten Luftmassenstrom zu bestimmen. Ein mit einem Bypass-Teil versehener Abschnitt einer Sensoreinrichtung ist durch eine Einstecköffnung in das Leitungsteil eingesetzt. Das Bypass-Teil weist eine Kanalstruktur mit einem Einlassbereich auf, von dem ein mit dem Messelement versehener Messkanal abzweigt. Der Eingangsbereich weist weiterhin eine Ausscheidungszone mit wenigstens einer Ausscheidungsöffnung auf, die sich an wenigstens einer Seitenwand des Bypass-Teils in den Leitungsdurchgang öffnet. Die Ausscheidungszone dient zur Ausscheidung von Flüssigkeits- und/oder Festkörperpartikeln aus der Kanalstruktur, die so davon abgehalten werden, in den mit dem Messelement versehenen Messkanal einzudringen und das Messelement zu verunreinigen.

Die Kanten, welche durch die der Hauptströmungsrichtung zugewandte Stirnseite und die Seitenwände des in die Leitung eingeführten Bypass-Teils gebildet werden, bilden bei den bekannten Vorrichtungen Anströmkanten aus, an denen große Gebiete abgelöster Strömung entstehen, die einerseits große Druckverluste und andererseits ein nicht beabsichtigtes Pulsieren der Strömung bewirken, infolgedessen Druckschwankungen durch die Ausscheidungsöffnung auf den von dem Einlassbereich abzweigenden Messkanal übertragen werden. Durch die Druckschwankungen im Messkanal kann das Ausgangssignal des Messelementes erheblich verfälscht werden.

### Vorteile der Erfindung

Die erfindungsgemäße Vorrichtung zur Bestimmung wenigstens eines Parameters eines in einer Leitung strömenden Mediums mit den kennzeichnenden Merkmalen des Anspruchs 1 hat demgegenüber den Vorteil, dass eine Strömungsablösung mit großen Gebieten abgelöster Strömung an den Seitenwänden des Bypass-Teils weitgehend vermieden wird. Dies wird durch ein in dem Leitungsteil in der Hauptströmungsrichtung gesehen vor dem Bypass-Teil angeordnetes aerodynamisches Strömungsableitteil erreicht, das wenigstens eine der Hauptströmungsrichtung zugewandte Ableitfläche aufweist, die ausgehend von einer von dem Bypass-Teil beabstandeten Scheitellinie beidseitig zu den beiden Seitenwänden gleichmäßig derart hingekrümmt ist, dass die von der Scheitellinie abgewandten Enden der Ableitfläche mit den Seitenwänden fluchten. Bei Verwendung des Strömungsableitteils und großen Strömungsgeschwindigkeiten in dem Leitungsteil wird die Grenzschicht der Strömung bereits an der Ableitfläche des Strömungsableitteils turbulent, was vorteilhaft ist, da in der turbulenten Strömung ein stärkere Impulsaustausch der strömenden Partikel in wandnahen und wandfernen Strömungsschichten erfolgt. Dies hat zur Folge, dass die turbulente Grenzschicht an der Ableitfläche des Strömungsableitteils und insbesondere an den Seitenwänden des Bypass-Teils entlang strömt, ohne sich davon abzulösen.

Jedoch findet bei kleinen Strömungsgeschwindigkeiten in dem Leitungsteil kein Übergang von einer laminaren zu einer turbulenten Strömung statt. Stattdessen strömt der Medienstrom zunächst an der Ableitfläche des Strömungsableitteils entlang und löst sich dann im Übergangsbereich der Ableitfläche und der Seitenwände aufgrund der dort vorhandenen Krümmungsänderung von der gekrümmten Ableitfläche in die ebene Seitenwand ab. Um auch bei geringen Strömungsgeschwindigkeiten in dem Leitungsteil eine Ablösung der Strömung zu vermeiden, ist daher in einem besonders vorteilhaften Ausführungsbeispiels der Erfindung vorgesehen, dass in der Hauptströmungsrichtung gesehen wenigstens vor der mit der Ausscheidungsöffnung versehenen Seitenwand, insbesondere aber an beiden parallelen Seitenwänden des Bypass-Teils, an der Ableitfläche oder wenigstens in direkter Nähe zur Ableitfläche eine turbulenzerzeugende Struktur vorgesehen ist, die Turbulenzen in der Grenzschicht der Strömung hervorruft. Durch diese Maßnahme wird bereits bei kleinen Strömungsgeschwindigkeiten in dem Leitungsteil erreicht, dass die Grenzschicht bereits im Bereich der Ableitfläche turbulent wird und sich dann nicht mehr von den Seitenwänden des Bypass-Teils ablöst.

Vorteilhafte Ausführungsbeispiele und Weiterentwicklungen der Erfindung werden durch die weiteren in den abhängigen Ansprüchen angegebenen Merkmale ermöglicht.

So kann das Strömungsableitteil besonders einfach mit einer elliptisch gekrümmten Ableitfläche versehen sein. Die kleine Halbachse der elliptisch gekrümmten Ableitfläche ist dabei so groß zu wählen wie die Hälfte des Abstandes der beiden Seitenwände des Bypass-Teils. Die große Halbachse der elliptisch gekrümmten Ableitfläche sollte wenigstens doppelt so groß wie die kleine Halbachse sein.

Die turbulenzerzeugende Struktur kann in sehr einfacher Weise durch wenigstens einen auf die Ableitfläche aufgebrachten oder in direkter Nähe zu der Ableitfläche angeordneten Draht gebildet werden. Der Draht kann beispielsweise mehrfach wechselseitig abgebogen sein und eine zackenartige Kontur mit einer Vielzahl von Zacken aufweisen.

Besonders vorteilhaft ist ein Ausführungsbeispiel, bei dem die turbulenzerzeugende Struktur durch mehrere in die Ableitfläche eingelassene Schlitze gebildet wird, die in jeweils einer senkrecht zu den Seitenwänden des Bypass-Teils und parallel zur Hauptströmungsrichtung verlaufenden Ebene angeordnet sind. Der in der Hauptströmungsrichtung auf die Ableitfläche auftreffende Medienstrom dringt teilweise in die Schlitze ein und tritt im Übergangsbereich des Strömungsableitteils und des Bypass-Teils aus den Schlitzen wieder aus. Hierdurch entstehen vor den Seitenwänden des Bypass-Teils kräftige Längswirbel in der Strömung, die zu einer turbulenten Strömungsgrenzschicht führen und eine Ablösung der Grenzschicht von den Seitenwänden verhindern. Außerdem wird erreicht, dass in der Strömung enthaltenes Wasser von den Schlitzen aufgenommen und seitlich abgeleitet wird, ohne in den Eingangsbereich der Kanalstruktur des Bypass-Teils zu gelangen.

Die Schlitze können einen rechteckförmigen Querschnitt aufweisen mit einer zwischen der Ableitfläche und dem Bypass-Teil angeordneten inneren Fläche, die vorzugsweise ausgehend von einer zweiten Scheitellinie ebenfalls elliptisch zu dem Bypass-Teil hingekrümmt ist, wobei die von der zweiten Scheitellinie abgewandten Enden der inneren Fläche in je eine schräg zu den Seitenwänden verlaufende Fläche übergehen. Hierdurch wird die Längswirbelbildung beim Austritt der Strömung aus den Schlitzen und damit die Turbulenzerzeugung verbessert.

Das Strömungsableitteil weist eine Durchgangsöffnung auf, die mit einer Öffnung des Eingangsbereichs der Kanalstruktur fluchtet, so dass ein Teilstrom des in dem Leitungsteil in der Hauptströmungsrichtung strömenden Mediums durch die Durchgangsöffnung des Strömungsableitteils in den Eingangsbereich der Kanalstruktur gelangen kann. Die turbulenzerzeugende Struktur kann in einer Richtung senkrecht zur Hauptströmungsrichtung und parallel zu den Seitenwänden sowohl oberhalb als auch unterhalb der Durchgangsöffnung und insbesondere auch an den die Durchgangsöffnung begrenzenden Seitenwänden angeordnet sein.

Um bisherige Sensoreinrichtungen als Steckfühler weiterhin in das Leitungsteil einsetzen zu können, ist vorgesehen, dass das Strömungsableitteil als separates Teil getrennt von der Sensoreinrichtung hergestellt ist. Das Strömungsableitteil kann insbesondere auch einstückig mit dem Leitungsteil ausgebildet sein. Dies stellt fertigungstechnisch kaum einen Mehraufwand dar, wenn das Leitungsteil zusammen mit dem Strömungsableitteil beispielsweise als Spritzgussteil hergestellt ist.

Ein weiteres vorteilhaftes Ausführungsbeispiel der Erfindung kombiniert das vor dem Bypass-Teil angeordnete aerodynamische Strömungsableitteil mit einem Gleichrichterteil, insbesondere einem Gitter, das in Hauptströmungsrichtung gesehen auf der Höhe des Strömungsableitteils angeordnet ist. Das Gleichrichterteil bewirkt nicht nur eine Vergleichmäßigung der Strömung hinter dem Gleichrichterteil, sondern insbesondere auch vor dem Gleichrichterteil. Es ist zwar bekannt Gleichrichterteile in einem Leitungsteil vor oder hinter dem Messfühler zur Vergleichmäßigung der Strömung einzusetzen, jedoch besteht in Verbindung mit dem Strömungsableitteil der zusätzliche Vorteil, dass das Gleichrichterteil einstückig mit dem Leitungsteil und dem Strömungsableitteil beispielsweise als Spritzgussteil hergestellt werden kann.

Besonders vorteilhaft ist es, das Gleichrichterteil in der Hauptströmungsrichtung hinter dem Einlass der Durchgangsöffnung des Strömungsableitteils anzuordnen, welche Durchgangsöffnung mit einer Öffnung des Eingangsbereichs der Kanalstruktur fluchtet. Hierdurch wird vorteilhaft erreicht, dass der in die Durchgangsöffnung des Strömungsableitteils und daher auch in den sich an die Durchgangsöffnung anschließenden Eingangsbereich der Kanalstruktur des Bypass-Teils eintretende Teilstrom des Mediums den Gleichrichter nicht bereits passiert hat. So ist sichergestellt, dass der eintretende Teilstrom nicht durch kleinere lokale Strömungsstörungen, welche der Gleichrichter hervorgerufen könnte, beeinflusst wird.

### Zeichnungen

Ausführungsbeispiele der Erfindung sind in den Zeichnungen dargestellt und werden in der nachfolgenden Beschreibung erläutert. Es zeigt
Fig. 1 einen Querschnitt durch ein erstes Ausführungsbeispiel der erfindungsgemäßen Vorrichtung,
Fig. 2 eine Draufsicht auf das Ausführungsbeispiel in Fig. 1,
Fig. 3 einen Querschnitt durch Fig. 2, entlang der Linie A-A,
Fig. 4 einen Querschnitt durch das Strömungsableitteil in einer zur Ebene der Fig. 3 parallelen Ebene,
Fig. 5 eine Draufsicht auf ein zweites Ausführungsbeispiel der erfindungsgemäßen Vorrichtung,
Fig. 6 einen Querschnitt durch Fig. 5,
Fig. 7 einen Querschnitt durch ein drittes Ausführungsbeispiel der Erfindung,
Fig. 8 eine Draufsicht auf eine viertes Ausführungsbeispiel der Erfindung,
Fig. 9 einen Querschnitt durch Fig. 8.

### Beschreibung der Ausführungsbeispiele

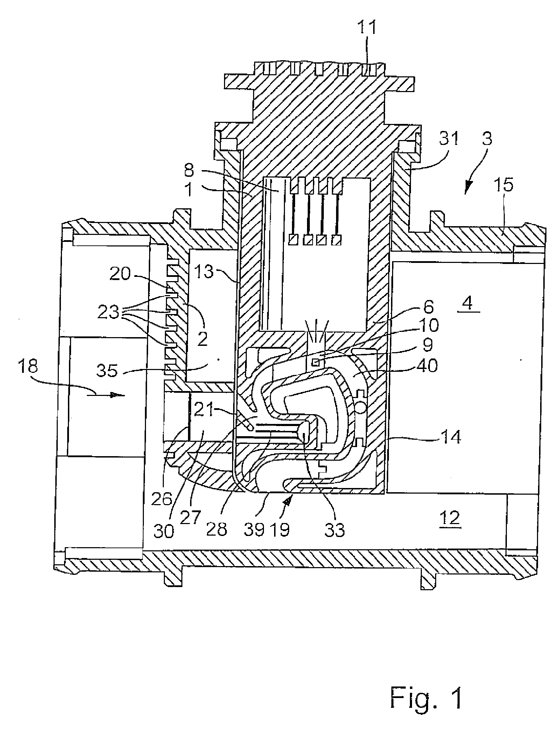

Fig. 1 zeigt ein Leitungsteil 3, das eine etwa zylindermantelförmige Wand 15 aufweist, die einen Leitungsdurchgang 12 umgibt, in dem ein Medium in einer Hauptströmungsrichtung strömt. Die Hauptströmungsrichtung ist durch einen entsprechenden Pfeil 18 in Fig. 1 gekennzeichnet und verläuft dort von links nach rechts. Die Hauptströmungsrichtung ist definiert als die Richtung, in welcher das Medium ausgehend vom Eingang des Leitungsteils bis zu dessen Ausgang in der Hauptsache durch den Leitungsdurchgang strömt, auch wenn lokale Wirbelbildungen und lokal vorhandene Ablösegebiete der Strömung lokale Abweichungen der Strömung von der Hauptströmungsrichtung aufweisen. Die Hauptströmungsrichtung verläuft hier parallel zur Mittelachse der zylindermantelförmigen Wand 15 des Leitungsteils 3. Das Leitungsteil 3 kann beispielsweise in eine Saugrohrleitung einer Brennkraftmaschine eingesetzt sein. Bei dem Medium handelt es sich beispielsweise um die zur Brennkraftmaschine strömende Luft.

Eine Sensoreinrichtung 1 ist an dem Leitungsteil 3 derart angeordnet, dass ein mit einer Kanalstruktur versehenes Bypass-Teil 6 der Sensoreinrichtung in den Leitungsdurchgang 12 fingerartig hineinragt und dort dem strömenden Medium mit einer vorbestimmten Ausrichtung ausgesetzt ist. Beim Einbau des Bypass-Teils 6 in die Leitung 3 ist sichergestellt, dass es in bezug auf die Hauptströmungsrichtung 18 des Mediums eine vorbestimmte Ausrichtung aufweist. Die Sensoreinrichtung 1 umfasst weiterhin einen elektrischen Anschluss 11 und eine Aufnahme für ein mit dem Anschluss 11 verbundenes Trägerteil 8, auf dem beispielsweise eine Auswerteelektronik angeordnet ist. Die Sensoreinrichtung kann mit dem Bypass-Teil 6 durch eine mit einem Flansch 31 umgebene Einstecköffnung der Wandung 15 des Leitungsteils 3 in den Leitungsdurchgang 12 eingeführt werden. Das Trägerteil 8 mit der Auswerteelektronik kann innerhalb und/oder außerhalb des Leitungsdurchgangs 12 angeordnet werden.

Die Sensoreinrichtung 1 weist ein auf einem Messelementträger 10 angeordnetes Messelement 9 auf, dessen Messdaten mit der Auswerteelektronik ausgewertet werden können. Mittels des Messelementes 9 wird beispielsweise als Parameter der Volumenstrom oder der Massenstrom des strömenden Mediums, insbesondere der Luftmassenstrom bestimmt. Weitere Parameter, die gemessen werden können, sind beispielsweise Druck, Temperatur, Konzentration eines Mediumbestandteils oder Strömungsgeschwindigkeit, die mittels geeigneter Sensorelemente bestimmt werden.

Das Bypass-Teil 6 hat ein Gehäuse mit einer beispielsweise quaderförmigen Struktur mit einer in der Einbauposition der Hauptströmungsrichtung 18 des Mediums zugewandten Stirnwand 13 und einer davon abgewandten Rückwand 14, einer ersten Seitenwand 17 und einer dazu parallelen zweiten Seitenwand 16 und einer beispielsweise parallel zur Hauptströmungsrichtung verlaufenden, an dem in die Leitung eingeführten Ende angeordneten dritten Wand 19. Weiterhin weist das Teil 6 eine darin angeordnete Kanalstruktur mit einem Eingangsbereich 27 und einem von dem Eingangsbereich 27 abzweigenden Messkanal 40 auf. Ein Teilstrom des in der Hauptströmungsrichtung 18 strömenden Mediums gelangt durch eine Öffnung 21 an der Stirnseite 13 des Bypass-Teils 6 in den Eingangsbereich 27 der Kanalstruktur. Von dem Eingangsbereich 27 aus gelangt das Medium teilweise in den mit dem Messelement 9 versehenen Messkanal 40 und teilweise strömt es weiter in eine hinter der Abzweigungsstelle für den Messkanal liegende Ausscheidungszone 28, welche sich über wenigstens eine in der ersten Seitenwand 16 und/oder der zweiten Seitenwand 17 angeordnete Ausscheidungsöffnung 33 in den Leitungsdurchgang 12 öffnet. Die Hauptströmungsrichtung 18 verläuft bei dem in Fig. 1 gezeigten Ausführungsbeispiel in einer Ebene, in der auch die Ausscheidungsöffnung 33 angeordnet ist. Ein erster Teilstrom des in den Eingangsbereich 27 eingetretenen Mediums strömt vollständig in den Messkanal 40 und verlässt diesen durch den Ausgang 39 an der Wand 19, ein zweiter Teilstrom strömt vollständig durch die eine Ausscheidungsöffnung 33 in das Leitungsteil 3 zurück. In dem strömenden Medium sind beispielsweise Flüssigkeits- und/oder Festkörperpartikel vorhanden, wie Öl- oder Wasserpartikel, die das Messelement 9 verschmutzen oder beschädigen können. Durch die Ausscheidungsöffnung 33 und den geometrischen Aufbau der Kanalstruktur im Eingangsbereich gelangen die Flüssigkeits- und Festkörperpartikel nicht in den Messkanal, sondern strömen wieder in den Leitungsdurchgang 12 zurück.

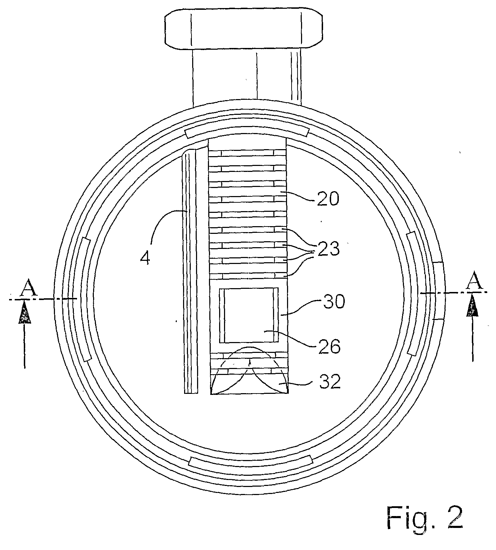

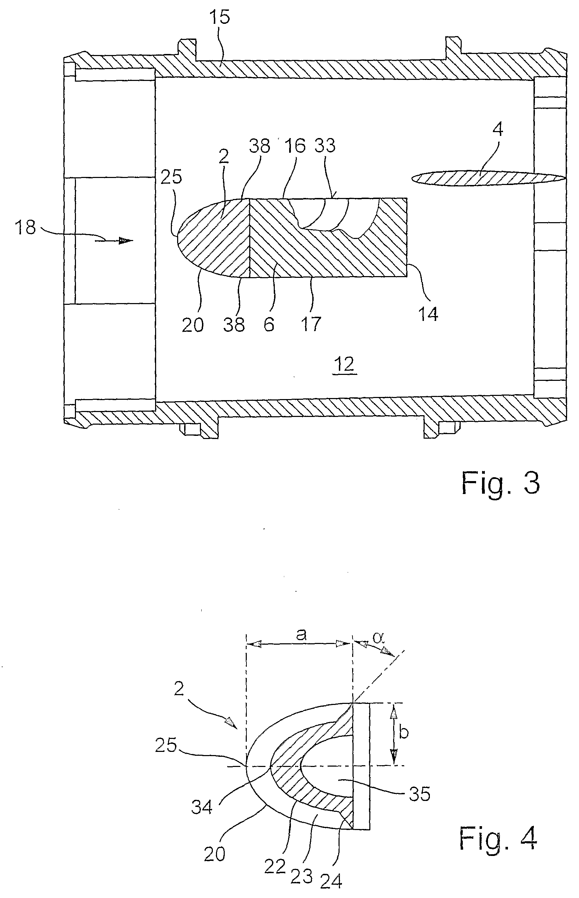

Wie in Fig. 1 weiterhin dargestellt ist, ist ein Strömungsableitteil 2 in dem Leitungsteil 3 angeordnet, dass in der Hauptströmungsrichtung 18 gesehen unmittelbar vor dem Bypass-Teil 6 angeordnet ist. Das Strömungsableitteil 2 ist in diesem Ausführungsbeispiel als separates Bauteil getrennt von der Sensoreinrichtung 1 hergestellt, kann aber auch einstückig damit verbunden sein. Wie in Fig. 1 zu erkennen ist, ist das Strömungsableitteil 2 einstückig mit dem Leitungsteil 3 als Spritzgussteil aus Kunststoff gefertigt. Das Strömungsableitteil weist eine der Hauptströmungsrichtung 18 zugewandte Ableitfläche 20 auf. Wie am besten in Fig. 3 zu erkennen ist, ist die Ableitfläche 20 ausgehend von einer von dem Bypass-Teil 6 entgegen der Hauptströmungsrichtung abstehenden Scheitellinie 25 beidseitig zu den beiden Seitenwänden 16, 17 gleichmäßig derart hingekrümmt, dass die von der Scheitellinie abgewandten Enden 38 der Ableitfläche 20 fluchtend mit den Seitenwänden 16, 17 ausgebildet sind (die Enden 38 gehen stetig und ohne eine Kante zu bilden in die Seitenwände 16,17 über). Dies kann zum Beispiel durch eine Kreiszylinderfläche erreicht werden, die vor die Stirnseite 13 gesetzt wird. In dem hier dargestellten bevorzugten Ausführungsbeispiel ist die Ableitfläche 20 jedoch elliptisch gekrümmt. Wie in Fig. 4 zu erkennen ist, ist die kleine Halbachse b der elliptisch gekrümmten Ableitfläche 20 so groß ist wie die Hälfe des Abstandes der beiden Seitenwände 16, 17 des Bypass-Teils. Die große Halbachse a der elliptisch gekrümmten Ableitfläche 20 ist wenigstens doppelt so groß ist wie die kleine Halbachse b. Das Strömungsableitteil 2 weist weiterhin eine Durchgangsöffnung 26 auf, die mit der Öffnung 21 des Eingangsbereichs 27 der Kanalstruktur fluchtet, so dass ein Teilstrom des Medienstromes in der Hauptströmungsrichtung 18 durch die Durchgangsöffnung 26 und die Öffnung 21 in den Eingangsbereich 27 gelangt. Wie in Fig. 2 dargestellt, wird die Durchführungsöffnung 26 durch Wände 30 seitlich begrenzt, deren Außenseite einen Teil der gekrümmten Ableitfläche 20 bilden. Hinter der von der Stirnseite 13 abgewandten Seite 14 des Bypass-Teils 6, zumindest jedoch hinter der Ausscheidungsöffnung 33, kann zusätzlich auf der mit der Ausscheidungsöffnung 33 versehenen Seite des Bypass-Teils 6 eine zu der Seitenwand 16 parallele Leitwand 4 in dem Leitungsteil 3 angeordnet sein. Die Leitwand 4 fluchtet nicht mit der Seitenwand, sondern ist gegenüber der Seitenwand versetzt angeordnet. Durch die Leitwand 4 wird eine Ablösung der Strömung von der mit der Ausscheidungsöffnung 33 versehenen Seitenwand 16 des Bypass-Teils 6 noch zuverlässiger vermieden.

Weiterhin ist, wie in Fig. 1 und 2 zu erkennen ist, eine turbulenzerzeugende Struktur 23 vorgesehen. Diese wird durch mehrere in die Ableitfläche 20 eingelassene Schlitze 23 gebildet, die in jeweils einer senkrecht zu den Seitenwänden 16, 17 des Bypass-Teils 6 und parallel zur Hauptströmungsrichtung 18 verlaufenden Ebene angeordnet sind. Die Schlitze weisen einen rechteckförmigen Querschnitt auf, wobei bei einer angenommenen Dimensionierung von b = 6,5 mm die Schlitzhöhe beispielsweise etwa 1 mm betragen kann und die Schlitze 2 mm voneinander beabstandet sind. Die Schlitze können bis zur Stirnseite 13 des Bypass-Teils 6 durchgehend ausgebildet sein. In dem hier gezeigten bevorzugten Ausführungsbeispiel ist jedoch vorgesehen, dass die Schlitze 23 eine zwischen der Ableitfläche 20 und dem Bypass-Teil 6 angeordnete inneren Fläche 22 ausweisen, die ausgehend von einer zweiten Scheitellinie 34 ebenfalls elliptisch zu dem Bypass-Teil hingekrümmt ist, wobei die von der zweiten Scheitellinie 34 abgewandten Enden der inneren Fläche 22 in je eine schräg unter einem Winkel α zu den Seitenwänden 16, 17 verlaufende Fläche 24 übergehen. Dies ist am besten in Fig. 4 zu erkennen. Der Winkel α sollte zwischen 20° und 70° groß sein und ist vorzugsweise 45° groß. Das Strömungsableitteil 2 kann zwischen der inneren Fläche 22 und der Stirnseite 13 eine fertigungsbedingte Aushöhlung 35 aufweisen.

Der auf die Ableitfläche 20 auftreffende Medienstrom wird teilweise an der Ableitfläche 20 entlang zu den Seitenwänden 16,17 umgeleitet, teilweise dringt er aber auch in die Schlitze 23 ein und wird dort an der inneren Fläche 22 in Richtung der schräg gestellten Flächen 24 abgelenkt. Von dort aus verlässt der Medienstrom die Schlitze 23 schräg zur Hauptströmungsrichtung 18. Am Ende der rampenartigen Flächen 24 entstehen beim Austritt des Medienstromes kräftige Längswirbel, die in der Grenzschichtströmung an den Seitenwänden 16,17 Turbulenzen erzeugen, so dass sich die Grenzschicht nicht ablöst. Hierdurch werden Druckschwankungen vermieden, die sich ansonsten über die Ausscheidungsöffnung 33 auf den Messkanal auswirken könnten. Die Turbulenzen entstehen aber auch, falls die Schlitze durchgehend ausgebildet sind.

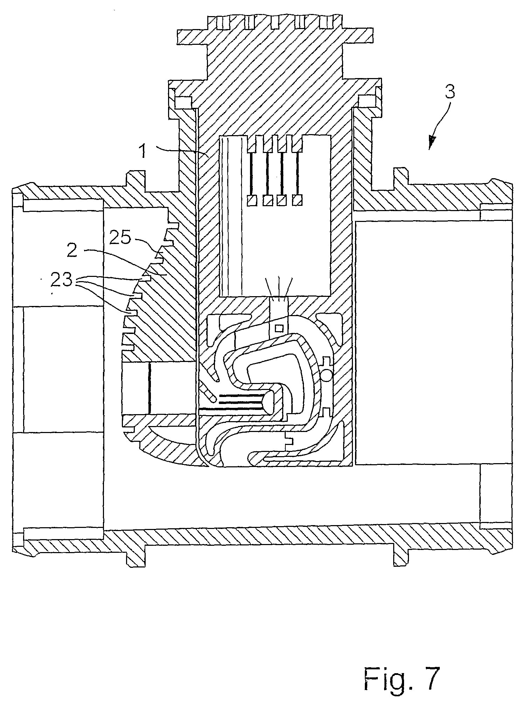

Fig. 7 zeigt ein Ausführungsbeispiel, bei dem die Scheitellinie 25 nicht geradlinig ausgebildet ist und auch nicht senkrecht zur Hauptströmungsrichtung 18 verläuft, wie das bei dem Ausführungsbeispiel in Fig. 1 gezeigt ist. Durch die gegenüber der Hauptströmungsrichtung 18 schräg verlaufende Scheitellinie entsteht eine im Bereich der Durchgangsöffnung 26 gegen die Hauptströmungsrichtung 18 vorspringende Kontur.

Hierdurch wird vorteilhaft erreicht, dass Wasser, das sich in den Schlitzen 23 sammelt und diese im Grenzfall auffüllt, durch die Hauptströmung in Fig. 7 schräg nach oben abgeführt wird und daher nicht in den Eingangsbereich 27 des Bypass-teils 6 gelangen kann.

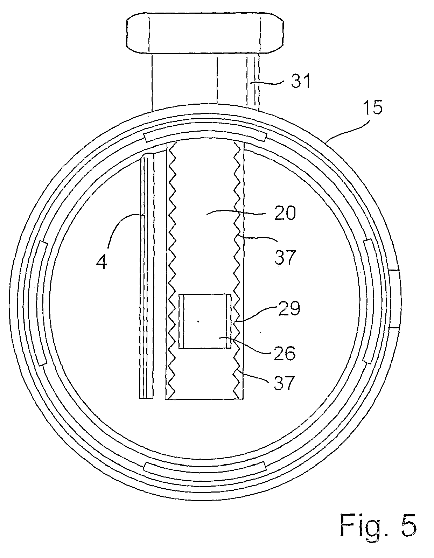

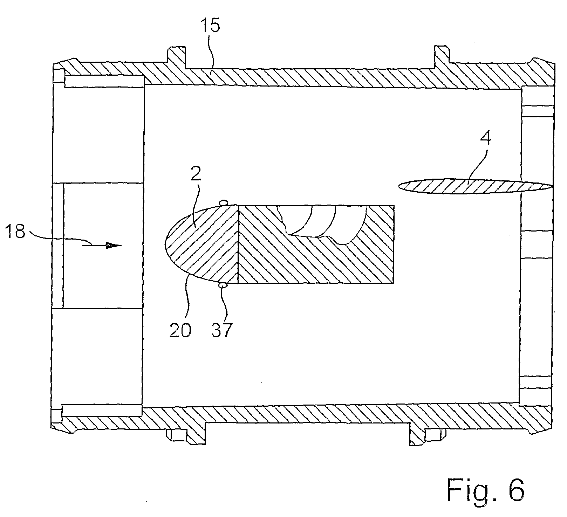

In Fig. 5 und Fig. 6 ist ein weiteres Ausführungsbeispiel der Erfindung dargestellt. Mit Ausnahme der turbulenzerzeugenden Struktur ist der Aufbau der Vorrichtung wie bei dem in der Fig. 1 gezeigten Ausführungsbeispiel. Auf die Ableitfläche 20 des Strömungsableitteils 2 ist beidseitig ein Draht 37 zum Beispiel durch Kleben aufgebracht. Der Durchmesser des Drahtes beträgt etwa 1 mm. Der Draht kann aber auch ohne die Ableitfläche 20 zu berühren in unmittelbarer Nähe zu der Ableitfläche 20 angeordnet sein. Der Draht 37 ist vorzugsweise mehrfach wechselseitig abgebogen und weist eine zackenartige Kontur mit einer Vielzahl von Zacken auf, kann aber auch geradlinig ausgebildet sein. Die Grenzschicht der an der elliptischen Ableitfläche 20 abgeleiteten Strömung wird durch den Draht turbulent, wodurch eine Ablösung der Strömung an den Seitenwänden 16,17 vermieden wird.

Abweichend von den hier dargestellten Ausführungsbeispielen kann die turbulenzerzeugende Struktur auch durch eine kleine Stufe oder Kante in der Ableitfläche 20 erzeugt werden. Hier sind verschiedenste Ausführungen denkbar. Wichtig ist, dass die turbulenzerzeugende Struktur durch eine Unstetigkeit und/oder Unebenheit (beispielsweise eine kleine Stufe, Kannte, Rippe usw.) an der oder zumindest in direkter Nähe zu der gleichmäßig gekrümmten Ableitfläche des Strömungsableitteils gebildet wird, so dass Turbulenzen in der Grenzschicht der Strömung entstehen.

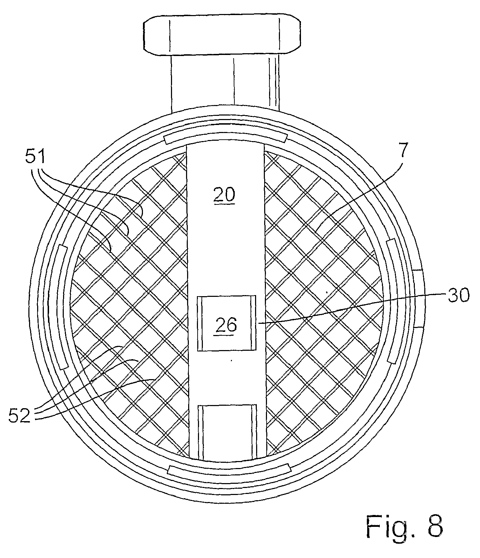

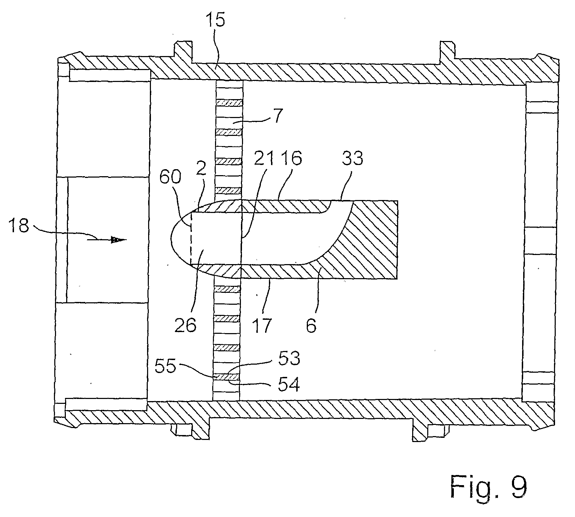

Ein weiteres Ausführungsbeispiel ist in Fig. 8 und Fig. 9 dargestellt. Bei diesem Ausführungsbeispiel ist in dem Leitungsteil 3 in der Hauptströmungsrichtung 18 auf der Höhe des Strömungsableitteils 2 ein Gleichrichterteil 7 angeordnet. Das Gleichrichterteil bewirkt eine vorteilhafte Vergleichmäßigung der Strömung hinter dem Gleichrichterteil. Darüber hinaus wird aber auch die Strömung strömungsaufwärts vor dem Gleichrichterteil zumindest teilweise vergleichmäßigt. Das Strömungsableitteil 2 weist wie bei dem Ausführungsbeispiel in Fig. 1 eine Durchgangsöffnung 26 auf, die mit einer Öffnung 21 des Eingangsbereichs der Kanalstruktur fluchtet. Das Gleichrichterteil 7 ist in der Hauptströmungsrichtung 18 hinter dem Einlass 60 dieser Durchgangsöffnung 26 und vor dem Bypassteil 6 angeordnet ist, was am besten in Fig. 9 zu erkennen ist. Der Einlass 60 der Durchgangsöffnung 26 liegt in einer zur Hauptströmungsrichtung senkrechten Ebene. Dadurch, dass das Gleichrichterteil 7 hinter dem Einlass 60 angeordnet ist, wird vorteilhaft erreicht, dass die in die Durchgangsöffnung 26 eintretende Strömung das Gleichrichterteil 7 nicht passiert und Strömungsstörungen, die hinter dem Gleichrichterteil entstehen können, auch nicht in die Durchgangsöffnung gelangen können. Besonders vorteilhaft an diesem Ausführungsbeispiel ist, dass der Gleichrichter nicht als separates Bauteil hergestellt werden muss und auch nicht separat montiert zu werden braucht. Stattdessen kann das Gleichrichterteil einstückig mit dem Strömungsableitteil 2 und mit dem Leitungsteil 3 beispielsweise als Spritzgussteil aus Kunststoff hergestellt werden, was besonders kostengünstig ist.

Wie in Fig. 8 dargestellt ist, kann das Gleichrichterteil 7 beispielsweise ein erstes Gitter aus zueinander parallelen Stegen 51 und ein zweites Gitter aus zueinander parallelen Stegen 52 umfasst, wobei die ersten Stege 51 in etwa senkrecht zu den zweiten Stegen 52 angeordnet sind. Jeder Steg weist zwei parallel zur Hauptströmungsrichtung 18 verlaufende Leitflächen 53, 54 und eine der Hauptströmung zugewandte Stirnseite 55 auf, wie in Fig. 9 dargestellt ist. Es ist jedoch auch denkbar ein einzelnes Gitter mit zueinander parallelen Stegen zu verwenden.

Weiterhin ist es auch möglich, die Ableitfläche 20 des Strömungsableitteils 2 mit turbulenzerzeugenden Strukturen zu versehen, so wie es in den Ausführungsbeispielen von Fig. 2, Fig. 5 oder Fig. 6 dargestellt ist, oder das Gleichrichterteil 7 zusammen mit der in Fig. 3 gezeigten Leitwand 4 in dem Leitungsteil 3 vorzusehen.

## Patentansprüche

1. Vorrichtung zur Bestimmung wenigstens eines Parameters eines in einer Leitung in einer Hauptströmungsrichtung (18) strömenden Mediums, insbesondere zur Bestimmung des Luftmassenstromes im Ansaugtrakt einer Brennkraftmaschine, umfassend ein einen Leitungsdurchgang bildendes Leitungsteil (3) und eine Sensoreinrichtung (1) mit einem Bypass-Teil (6), das ein Gehäuseteil mit einer quaderförmigen Struktur hat, die von einer Stirnwand (13), einer davon abgewandten Rückwand (14) und zwei parallelen Seitenwänden (17, 16) definiert wird, wobei das Bypass-Teil (6) derart in dem Leitungsteil (3) angeordnet ist, dass ein Teilstrom des in dem Leitungsteil strömenden Mediums in einen Eingangsbereich (27) einer in dem Bypass-Teil ausgebildeten Kanalstruktur gelangt, wobei der Eingangsbereich (27) eine Ausscheidungsöffnung (33) aufweist, die sich an wenigstens einer von zwei parallel zur Hauptströmungsrichtung (18) verlaufenden Seitenwänden (16, 17) des Bypass-Teils (6) in den Leitungsdurchgang öffnet, **dadurch gekennzeichnet, dass** in dem Leitungsteil (3) in der Hauptströmungsrichtung (18) gesehen vor dem Bypass-Teil (6) ein Strömungsableitteil (2) angeordnet ist, das wenigstens eine der Hauptströmungsrichtung (18) zugewandte Ableitfläche (20) aufweist, die ausgehend von einer von dem Bypass-Teil (6) beabstandeten Scheitellinie (25) beidseitig zu den beiden Seitenwänden (16, 17) gleichmäßig derart hingekrümmt ist, dass die von der Scheitellinie abgewandten Enden (38) der Ableitfläche (20) mit den Seitenwänden (16, 17) fluchten, wobei das Strömungsableitteil (2) eine Durchgangsöffnung (26) aufweist, die mit einer Öffnung des Eingangsbereichs (27) der Kanalstruktur fluchtet.

2. Vorrichtung nach Anspruch 1, **dadurch gekennzeichnet**, das in der Hauptströmungsrichtung (18) wenigstens vor der mit der Ausscheidungsöffnung (28) versehenen Seitenwand (16) an der Ableitfläche (20) oder wenigstens in direkter Nähe zu der Ableitfläche (20) des Bypass-Teils (6) eine turbulenzerzeugende Struktur (23, 37) vorgesehen ist, die Turbulenzen in der Grenzschicht der Strömung an dieser Seitenwand (16) des Bypass-Teils hervorruft.

3. Vorrichtung nach Anspruch 1 oder 2, **dadurch gekennzeichnet, dass** die Ableitfläche (20) elliptisch gekrümmt ist.

4. Vorrichtung nach Anspruch 3, **dadurch gekennzeichnet, dass** die kleine Halbachse (b) der elliptisch gekrümmten Ableitfläche (20) so groß ist wie die Hälfe des Abstandes der beiden Seitenwände (16, 17) des Bypass-Teils und dass die große Halbachse (a) der elliptisch gekrümmten Ableitfläche (20) wenigstens doppelt so groß ist wie die kleine Halbachse (b).

5. Vorrichtung nach Anspruch 2, **dadurch kennzeichnet, dass** die turbulenzerzeugende Struktur durch eine Unstetigkeit und/oder Unebenheit an der gleichmäßig gekrümmten Ableitfläche (20) gebildet wird.

6. Vorrichtung nach einem der Ansprüche 2 bis 5, **dadurch gekennzeichnet, dass** die turbulenzerzeugende Struktur durch wenigstens einen auf die Ableitfläche (20) aufgebrachten oder in direkter Nähe zu der Ableitfläche (20) angeordneten Draht (37) gebildet wird.

7. Vorrichtung nach Anspruch 6, **dadurch gekennzeichnet, dass** der Draht (37) mehrfach wechselseitig abgebogen ist und eine zackenartige Kontur mit einer Vielzahl von Zacken aufweist.

8. Vorrichtung nach einem der Ansprüche 2 bis 5, **dadurch gekennzeichnet, dass** die turbulenzerzeugende Struktur durch mehrere in die Ableitfläche (20) eingelassene Schlitze (23) gebildet wird, die in jeweils einer senkrecht zu den Seitenwänden (16, 17) des Bypass-Teils (6) und parallel zur Hauptströmungsrichtung (18) verlaufenden Ebene angeordnet sind.

9. Vorrichtung nach Anspruch 8, **dadurch gekennzeichnet, dass** die Schlitze (23) einen rechteckförmigen Querschnitt aufweisen mit einer zwischen der Ableitfläche (20) und dem Bypass-Teil (6) angeordneten inneren Fläche (22), die vorzugsweise ausgehend von einer zweiten Scheitellinie (34) ebenfalls elliptisch zu dem Bypass-Teil hingekrümmt ist, wobei die von der zweiten Scheitellinie (34) abgewandten Enden der inneren Fläche (22) in je eine schräg zu den Seitenwänden (16, 17) verlaufende Fläche (24) übergehen.

10. Vorrichtung nach Anspruch 2 und 9 **dadurch gekennzeichnet, dass** die turbulenzerzeugende Struktur (23) in einer Richtung senkrecht zur Hauptströmungsrichtung (18) und parallel zu den Seitenwänden (16, 17) sowohl oberhalb als auch unterhalb der Durchgangsöffnung (26) und insbesondere zusätzlich an den die Durchgangsöffnung begrenzenden Seitenwänden (30) angeordnet ist.

11. Vorrichtung nach einem der vorstehenden Ansprüche, **dadurch gekennzeichnet, dass** das Strömungsableitteil (1) als separates Teil getrennt von der Sensoreinrichtung hergestellt ist und insbesondere einstückig mit dem Leitungsteil (3) ausgebildet ist.

12. Vorrichtung nach einem der vorstehenden Ansprüche, **dadurch gekennzeichnet, dass** in dem Leitungsteil (3) in der Hauptströmungsrichtung (18) auf der Höhe des Strömungsableitteils (2) und vor dem Bypassteil (6) ein Gleichrichterteil (7) angeordnet ist.

13. Vorrichtung nach Anspruch 12, **dadurch gekennzeichnet, dass** das Strömungsableitteil (2) eine Durchgangsöffnung (26) aufweist, die mit einer Öffnung (21) des Eingangsbereichs (27) der Kanalstruktur fluchtet und dass das Gleichrichterteil (7) in der Hauptströmungsrichtung (18) hinter dem Einlass (60) der Durchgangsöffnung (26) angeordnet ist.

14. Vorrichtung nach Anspruch 12, **dadurch gekennzeichnet, dass** das Gleichrichterteil (7) einstückig mit dem Strömungsableitteil (2) und mit dem Leitungsteil (3) verbunden ist.

15. Vorrichtung nach Anspruch 12, **dadurch gekennzeichnet, dass** das aus dem Gleichrichterteil (7), dem Strömungsableitteil (2) und dem Leitungsteil (3) gebildete integrierte Bauteil aus Kunststoff und insbesondere als Spritzgussteil hergestellt ist.

16. Vorrichtung nach Anspruch 12, **dadurch gekennzeichnet, dass** das Gleichrichterteil (7) ein erstes Gitter aus zueinander parallelen Stegen (51) und ein zweites Gitter aus zueinander parallelen Stegen (52) umfasst, wobei die ersten Stege (51) in etwa senkrecht zu den zweiten Stegen (52) angeordnet sind.

## Claims

1. Device for determining at least one parameter of a medium flowing in a main flow direction (18) in a line, in particular for determining the air mass flow in the intake tract of an internal combustion engine, comprising a line part (3) which forms a line passage and comprising a sensor device (1) with a bypass part (6), which bypass part has a housing part with a cuboidal structure defined by a face wall (13), by a rear wall (14) averted from said face wall, and by two parallel side walls (17, 16), wherein the bypass part (6) is arranged in the line part (3) such that a partial flow of the medium flowing in the line part passes into an inlet region (27) of a duct structure which is formed in the bypass part, wherein the inlet region (27) has a discharge region (33) which opens into the line passage at at least one of two side walls (16, 17), which run parallel to the main flow direction (18), of the bypass part (6), **characterized in that**, in the line part (3), upstream of the bypass part (6) as viewed in the main flow direction (18), there is arranged a flow-diverting part (2) which has at least one diverting surface (20) which faces toward the main flow direction (18) and which, proceeding from an apex line (25) which is spaced apart from the bypass part (6), is curved uniformly to both sides toward the two side walls (16, 17), in such a way that those ends (38) of the diverting surface (20) which are averted from the apex line are aligned with the side walls (16, 17), wherein the flow-diverting part (2) has a passage opening (26) which is aligned with an opening of the inlet region (27) of the duct structure.

2. Device according to Claim 1, **characterized in that** a turbulence-generating structure (23, 37) is provided, at least upstream of that side wall (16) which is provided with the discharge opening (28) as viewed in the main flow direction (18), on the diverting surface (20) or at least in the direct vicinity of the diverting surface (20) of the bypass part (6), which turbulence-generating structure generates turbulence in the boundary layer of the flow at said side wall (16) of the bypass part.

3. Device according to Claim 1 or 2, **characterized in that** that the diverting surface (20) is elliptically curved.

4. Device according to Claim 3, **characterized in that** the small semiaxis (b) of the elliptically curved diverting surface (20) is equal in length to half of the spacing of the two side walls (16, 17) of the bypass part, and **in that** the large semiaxis (a) of the elliptically curved diverting surface (20) is at least twice the length of the small semiaxis (b).

5. Device according to Claim 2, **characterized in that** the turbulence-generating structure is formed by a discontinuity and/or unevenness on the uniformly curved diverting surface (20).

6. Device according to one of Claims 2 to 5, **characterized in that** the turbulence-generating structure is formed by at least one wire (37) which is applied to the diverting surface (20) or which is arranged in the direct vicinity of the diverting surface (20).

7. Device according to Claim 6, **characterized in that** the wire (37) is multiply bent to alternate sides and has a serrated contour with a multiplicity of serrations.

8. Device according to one of Claims 2 to 5, **characterized in that** the turbulence-generating structure is formed by multiple slots (23) which are formed into the diverting surface (20), which slots are each arranged in a plane running perpendicular to the side walls (16, 17) of the bypass part (6) and running parallel to the main flow direction (18).

9. Device according to Claim 8, **characterized in that** the slots (23) have a rectangular cross section with an inner surface (22) which is arranged between the diverting surface (20) and the bypass part (6) and which is preferably likewise elliptically curved towards the bypass part proceeding from a second apex line (34), wherein those ends of the inner surface (22) which are averted from the second apex line (34) transition into in each case one surface (24) which runs obliquely with respect to the side walls (16, 17).

10. Device according to Claims 2 and 9, **characterized in that** the turbulence-generating structure (23) is arranged both above and below the passage opening (26) as viewed in a direction perpendicular to the main flow direction (18) and parallel to the side walls (16, 17), and in particular additionally on the side walls (30) bordering the passage opening.

11. Device according to one of the preceding claims, **characterized in that** the flow-diverting part (1) is produced as a separate part separately from the sensor device, and is in particular formed integrally with the line part (3).

12. Device according to one of the preceding claims, **characterized in that** a straightener part (7) is arranged in the line part (3) at the level of the flow-diverting part (2), and upstream of the bypass part (6), as viewed in the main flow direction (18).

13. Device according to Claim 12, **characterized in that** the flow-diverting part (2) has a passage opening (26) which is aligned with an opening (21) of the inlet region (27) of the duct structure, and **in that** the straightener part (7) is arranged downstream of the inlet (60) of the passage opening (26) as viewed in the main flow direction (18).

14. Device according to Claim 12, **characterized in that** the straightener part (7) is connected integrally to the flow-diverting part (2) and to the line part (3).

15. Device according to Claim 12, **characterized in that** that the integrated component formed from the straightener part (7), the flow-diverting part (2) and the line part (3) is produced from plastic, and in particular as an injection-moulded part.

16. Device according to Claim 12, **characterized in that** the straightener part (7) comprises a first grate composed of mutually parallel webs (51) and a second grate composed of mutually parallel webs (52), wherein the first webs (51) are arranged approximately perpendicular to the second webs (52).

## Revendications

1. Dispositif pour déterminer au moins un paramètre d'une substance s'écoulant dans une conduite dans une direction d'écoulement principale (18), en particulier pour déterminer le débit massique d'air dans le conduit d'admission d'un moteur à combustion interne, comprenant une partie de conduite (3) formant un passage de conduite et un dispositif de capteur (1) avec une partie de dérivation (6), qui présente une partie de boîtier avec une structure parallélépipédique qui est définie par une paroi frontale (13), une paroi arrière (14) opposée à celle-ci et deux parois latérales parallèles (17, 16), la partie de dérivation (6) étant disposée dans la partie de conduite (3) de telle sorte qu'un flux partiel de la substance s'écoulant dans la partie de conduite parvienne dans une région d'entrée (27) d'une structure de canal réalisée dans la partie de dérivation, la région d'entrée (27) présentant une ouverture de séparation (33) qui s'ouvre au niveau d'au moins l'une de deux parois latérales (16, 17) de la partie de dérivation (6) s'étendant parallèlement à la direction d'écoulement principale (18) dans le passage de conduite, **caractérisé en ce qu'**une partie d'évacuation d'écoulement (2) est disposée dans la partie de conduite (3), vu dans la direction d'écoulement principale (18), avant la partie de dérivation (6), laquelle présente au moins une surface d'évacuation (20) tournée vers la direction d'écoulement principale (18) qui, partant d'une ligne de sommet (25) espacée de la partie de dérivation (6), est courbée des deux côtés uniformément vers les deux parois latérales (16, 17) de telle sorte que les extrémités (38) de la surface d'évacuation (20) opposées à la ligne de sommet soient alignées avec les parois latérales (16, 17), la partie d'évacuation d'écoulement (2) présentant une ouverture de passage (26) qui est alignée avec une ouverture de la région d'entrée (27) de la structure de canal.

2. Dispositif selon la revendication 1, **caractérisé en ce que** dans la direction d'écoulement principale (18), au moins avant la paroi latérale (16) pourvue de l'ouverture de séparation (28), est prévue, au niveau de la surface d'évacuation (20) ou au moins à proximité immédiate de la surface d'évacuation (20) de la partie de dérivation (6), une structure générant des turbulences (23, 37), qui provoque des turbulences dans la couche limite de l'écoulement au niveau de cette paroi latérale (16) de la partie de dérivation.

3. Dispositif selon la revendication 1 ou 2, **caractérisé en ce que** la surface d'évacuation (20) présente une courbure elliptique.

4. Dispositif selon la revendication 3, **caractérisé en ce que** le petit demi-axe (b) de la surface d'évacuation de courbure elliptique (20) est aussi grand que la moitié de la distance des deux parois latérales (16, 17) de la partie de dérivation et **en ce que** le grand demi-axe (a) de la surface d'évacuation de courbure elliptique (20) est au moins deux fois plus grand que le petit demi-axe (b).

5. Dispositif selon la revendication 2, **caractérisé en ce que** la structure générant les turbulences est formée par un défaut d'uniformité et/ou de planéité au niveau de la surface d'évacuation de courbure uniforme (20).

6. Dispositif selon l'une quelconque des revendications 2 à 5, **caractérisé en ce que** la structure générant des turbulences est formée par au moins un fil métallique (37) appliqué sur la surface d'évacuation (20) ou disposé à proximité immédiate de la surface d'évacuation (20).

7. Dispositif selon la revendication 6, **caractérisé en ce que** le fil métallique (37) est courbé plusieurs fois de manière alternée et présente un contour en dents de scie avec une pluralité de dents.

8. Dispositif selon l'une quelconque des revendications 2 à 5, **caractérisé en ce que** la structure générant des turbulences est formée par plusieurs fentes (23) pratiquées dans la surface d'évacuation (20), lesquelles sont disposées à chaque fois dans un plan s'étendant perpendiculairement aux parois latérales (16, 17) de la partie de dérivation (6) et parallèlement à la direction d'écoulement principale (18).

9. Dispositif selon la revendication 8, **caractérisé en ce que** les fentes (23) présentent une section transversale de forme rectangulaire avec une surface interne (22) disposée entre la surface d'évacuation (20) et la partie de dérivation (6), qui est également pourvue d'une courbure elliptique vers la partie de dérivation à partir d'une deuxième ligne de sommet (34), les extrémités de la surface interne (22) opposées à la deuxième ligne de sommet (34) se prolongeant dans une surface respective (24) s'étendant obliquement par rapport aux parois latérales (16, 17).

10. Dispositif selon les revendications 2 et 9, **caractérisé en ce que** la structure générant des turbulences (23) est disposée dans une direction perpendiculaire à la direction d'écoulement principale (18) et parallèlement aux parois latérales (16, 17) à la fois au-dessus et en dessous de l'ouverture de passage (26) et en particulier en outre au niveau des parois latérales (30) limitant l'ouverture de passage.

11. Dispositif selon l'une quelconque des revendications précédentes, **caractérisé en ce que** la partie d'évacuation d'écoulement (1) est réalisée sous forme de partie séparée, séparée du dispositif de capteur, et est réalisée notamment d'une seule pièce avec la partie de conduite (3).

12. Dispositif selon l'une quelconque des revendications précédentes, **caractérisé en ce que** dans la partie de conduite (3) dans la direction d'écoulement principale (18) à la hauteur de la partie d'évacuation d'écoulement (2) et avant la partie de dérivation (6), est disposée une partie de redresseur (7).

13. Dispositif selon la revendication 12, **caractérisé en ce que** la partie d'évacuation d'écoulement (2) présente une ouverture de passage (26) qui est alignée avec une ouverture (21) de la région d'entrée (27) de la structure de canal et **en ce que** la partie de redresseur (7) est disposée dans la direction d'écoulement principale (18) derrière l'entrée (60) de l'ouverture de passage (26).

14. Dispositif selon la revendication 12, **caractérisé en ce que** la partie de redresseur (7) est connectée d'une seule pièce avec la partie d'évacuation d'écoulement (2) et avec la partie de conduite (3).

15. Dispositif selon la revendication 12, **caractérisé en ce que** le composant intégré formé de la partie de redresseur (7), de la partie d'évacuation d'écoulement (2) et de la partie de conduite (3) est fabriqué en plastique et notamment sous forme de pièce moulée par injection.

16. Dispositif selon la revendication 12, **caractérisé en ce que** la partie de redresseur (7) comprend une première grille constituée de nervures parallèles les unes aux autres (51) et une deuxième grille constituée de nervures parallèles les unes aux autres (52), les premières nervures (51) étant disposées approximativement perpendiculairement aux deuxièmes nervures (52).
